# EUROPÄISCHE PATENTSCHRIFT

(11) **EP 2 236 676 B1**
(45) Veröffentlichungstag und Bekanntmachung des Hinweises auf die Patenterteilung: **19.09.2012**
(21) Anmeldenummer: 09008035.9
(22) Anmeldetag: 18.06.2009
(51) Int. Cl.: E02D 27/42, F03D 1/00, E02D 27/52

(54) **Fundamentkörper für eine Windenenergieanlage**
Foundation for a wind turbine
Fondation d'une turbine d'énergie éolienne

(30) Priorität: 25.03.2009 DE 102009014920
(43) Veröffentlichungstag der Anmeldung: 06.10.2010
(73) Patentinhaber: Tiefbau-GmbH "Unterweser", 26129 Oldenburg (DE)
(72) Erfinder: Dröge, Lutz, 26121 Oldenburg (DE)
(74) Vertreter: Jabbusch, Wolfgang

(56) Entgegenhaltungen:
- WO-A-03/080939
- WO-A-2004/053238
- WO-A-2008/119878
- DE-A1-102006 002 780
- DE-U1-202007 009 474
- GB-A- 2 148 365
- US-A1- 2004 262 926

## Beschreibung

Die Erfindung bezieht sich auf einen Fundamentkörper, für eine Offshore-Windenergieanlage, mit einem zum Standort der Windenergieanlage verbringbaren und dort versenkbaren Sockel, der die Basis einer Aufnahme für einen Turm der Windenergieanlage ist, und der als eine Schwimmwanne ausgebildet ist, die Zylinderform aufweist, bei welcher das Verhältnis Zylinderhöhe zu Zylinderdurchmesser gleich 1:3 bis 1:4 ist, wobei die Aufnahme ein Schaft ist, bei dem das Verhältnis von Schaftdurchmesser zum Sockeldurchmesser ungefähr 1:6 bis 1:3 ist und ein Übergang vom Schaft in den Sockel als ein Konus ausgebildet ist, dessen Höhe etwa gleich der doppelten Höhe des Sockels ist, sowie an dem freien Ende des Schaftes ein Kopfstück angeordnet ist.

Ein Fundamentkörper der vorbezeichneten Gattung ist nach der DE 10 2006 002 780 A1 bekannt.

Der bekannte Fundamentkörper ist Teil einer so genannten Schwergewichtsgründung. Diese hat den Vorteil, dass neben der Vorbereitung und Herstellung der Gründungsfläche am Meeresgrund keine weiteren Maßnahmen am Ort der Gründung der aufzustellenden Windenergieanlage auszuführen sind.

Der Fundamentkörper ist dabei zumeist derart dimensioniert, dass seine Aufnahme für den Turm der Windenergieanlage nach seiner Aufstellung am Errichtungsort über die Wasseroberfläche hinausragt, derart, dass die Windenergieanlage verhältnismäßig problemlos mit dem aufgestellten Fundamentkörper verbunden werden kann.

Für den Transport, vom Bauort an Land zum Aufstellungsort und für das dortige Aufstellen, bzw. die Montage oder Errichtung des Fundamentkörpers an diesem Aufstellungsort, ist es üblich, Spezialschiffe, z.B. Halbtaucher zu verwenden. Oftmals wird auch ein Ponton in Verbindung mit einem Schwimmkran verwendet.

Problematisch ist bei der Handhabung der Schwergewichtsfundamente mit Fundamentkörpern, welche als Basis einer Aufnahme für einen Turm oder Mast der Windenergieanlage dienen, ebenfalls der Einfluss von Wind und Wellen am Aufstellungsort bzw. auf dem Transportweg vom geschützten Bauplatz an Land oder im Hafen zum Aufstellungsort der Windenergieanlage im freien und somit ungeschützten Seegebiet. Auch das sichere Abfangen der sich bei Betrieb der Windenergieanlage einstellenden Belastungskräfte, durch den Fundamentkörper, ist ein Problem.

Der Erfindung liegt die Aufgabe zugrunde, einen als Schwergewichtsfundament einsetzbaren Fundamentkörper der eingangs bezeichneten Gattung zu schaffen, bei dem durch stetigen Kraftfluss ein Abtrag auftretender Lasten gesichert ist.

Diese Aufgabe ist erfindungsgemäß gelöst durch die Merkmale des Patentanspruchs 1.

Weiterbildungen und vorteilhafte Ausgestaltungen des erfindungsgemäßen Fundamentkörpers ergeben sich aus den Merkmalen der Unteransprüche 2 und 3.

Die Formgebung und Abmessung des erfindungsgemäßen Fundamentkörpers ermöglicht einen stetigen Kraftfluss vom Kopfstück, an dem die Lasten der Windenergieanlage aufgenommen werden, über den lotrechten Schaft und den schräg geformten Konus bis in den massiven Sockelbereich hinein. Dieser harmonische Querschnittsverlauf ermöglicht den Abtrag der Vertikallasten.

Mit dem erfindungsgemäßen Fundamentkörper lässt sich ein so genanntes Schwergewichtsfundament bilden, das für die Gründung einer Windenergieanlage am Meeresgrund verwendbar ist.

Der Fundamentkörper ist so aufgebaut, dass zunächst an Land ein Bodenteil des Sockels hergestellt werden kann. Dieses Bodenteil ist mit Vorteil eine einfach herzustellende runde Platte, und weist somit etwa die Form einer Scheibe auf. Der Rand des Bodenteils wird mit Vorteil hochgezogen gestaltet, wodurch das Bodenteil einen Freibord mit vorbestimmter Höhe erhält, der die Schwimmfähigkeit des Bodenteils begründet.

Das soweit gefertigte Bodenteil kann sodann mit geeigneten Hebezeugen in ein Gewässer gesetzt werden, dass einen geeigneten Auslass oder Zugang zum Meer hat. Das in das Gewässer gesetzte, schwimmende Bodenteil wird anschließend weiter aufgebaut.

Auf den hochgezogenen Rand des schwimmenden Bodenteils werden weitere Bauteile gesetzt, die den Freibord vergrößern, und zur Bildung einer zylinderförmigen Schwimmwanne führen. Auch Querwände zur Aussteifung sind einsetzbar. Dabei nimmt der Tiefgang des aus dem schwimmenden Bodenteils gebildeten Sockels entsprechend dem Baufortschritt stetig zu, bis der dann immer noch schwimmende Fundamentkörper fertig gestellt ist.

Bei der zylinderförmigen Schwimmwanne ist das Verhältnis Zylinderhöhe zu Zylinderdurchmesser etwa gleich 1:3 bis 1:4, vorzugsweise 1:3.

Der schwimmende Fundamentkörper kann nach seiner Fertigstellung, die mit Vorteil in ruhigen Gewässern erfolgte, zum Ort der Aufstellung der Offshore-Windenergieanlage verschwommen werden. Zur Beförderung des schwimmenden Fundamentkörpers sind keine Spezialfahrzeuge erforderlich. Es sind übliche Schleppfahrzeuge geeignet, die meistens in genügender Anzahl in den Häfen der Küsten zur Verfügung stehen.

Die große Basis im Bereich des Sockels gewährleistet während der Herstellung des Fundamentkörpers einen ausreichenden Auftrieb. Die Höhe des Sockels ist so ausgelegt und wird während der Fertigung auch eingehalten, dass in jeder Phase der Herstellung ein ausreichend großer Freibord besteht, sodass kein Wasser über die freie Kante ins Innere des als Schwimmwanne ausgebildeten Sockels gelangen kann. Erst nach der Fertigstellung des gesamten Fundamentkörpers erreicht dieser seinen maximalen Tiefgang von etwa 10 Metern. Die Wasserlinie, dass heißt die Schwimmebene, liegt dann oberhalb des Sockels in einem Bereich, in dem sich der Übergang vom einen Turm der Windenergieanlage aufnehmenden Schaft in den Sockel befindet. Dieser Übergang vom Schaft in den Sockel ist in besonders vorteilhafter Weise als ein Konus ausgebildet. Dieser gewährleistet durch seine Form einen stetigen Verlauf des Trägheitsmomentes, sodass zu keinem Zeitpunkt labile Schwimmlagen des fertig gestellten Fundamentkörpers entstehen. Das Trägheitsmoment ist während des Transports des Fundamentkörpers trotz eines möglichen Tiefgangs von über 10 Metern, der durch mögliche Wellen noch um 1 bis 2 Meter erhöht werden könnte, in den für die Schwimmstabilität relevanten und nachzuweisenden Schnitten immer noch groß genug.

Bei dem erfindungsgemäßen Fundamentkörper sind aufgrund seiner speziellen Formgebung plötzliche Sprünge im Querschnitt und damit im Trägheitsmoment vermieden. Die Schwimmstabilität ist bis zum Absenken des Fundamentkörpers am Standort der Windenergieanlage auf die Endtiefe zu jedem Zeitpunkt nachweisbar.

Das Absenken des Fundamentkörpers am Standort der Windenergieanlage erfolgt durch Ballastierung. Beispielsweise kann das Innere des Fundamentkörpers geflutet werden, um dessen Auftrieb mehr oder weniger zu vermindern.

Die besonderen Abmessungen des Fundamentkörpers haben den Vorteil, dass der Fundamentkörper auch zusätzlich noch mit Sand als Ballast gefüllt werden könnte, um die Standfestigkeit der Windenergieanlage am Aufstellungsort zu erhöhen.

Die Belastung durch Wellengang ist für jedes im Wasser stehende Bauwerk von erheblicher Bedeutung. Je geringer die Angriffsfläche ist, desto kleiner ist die Gesamtbelastung des Bauwerks. Demgemäß ist die Form des erfindungsgemäßen Fundamentkörpers so ausgebildet, dass im Bereich des größten Kraftangriffs der Welle der Durchmesser des Fundamentkörpers auf das minimale erforderliche Maß reduziert ist. Der Schaftdurchmesser ergibt sich aus dem Durchmesser des Turmes der Windenergieanlage. Das Verhältnis von Schaftdurchmesser zum Sockeldurchmesser ist etwa 1:6 bis 1:3, wobei ein bevorzugtes Verhältnis 1:5 ist. Der Schaft wird erfindungsgemäß erst deutlich unterhalb der Wasserlinie bei aufgestelltem Fundamentkörper zum Konus hin aufgeweitet, womit Kräfte durch Wellenangriff soweit wie möglich reduziert sind.

Die vertikale Führung des Schaftes bis unterhalb der Wasserlinie ermöglicht mit Vorteil eine konstruktiv einwandfreie Anordnung der Ausrüstungsteile des Fundamentkörpers, wie Steigeleitern und Schiffsabweiser. Würde sich der Übergang zwischen Schaft und Konus weiter oben befinden, wäre diese Anordnung nur mit Zusatzmaßnahmen möglich. Die Ausrüstungsteile müssten gegebenenfalls geneigt angebracht werden oder befänden sich in einem größeren Abstand zum Fundamentkörper und wären dementsprechend anfälliger gegen Schiffsstoß und andere äußere mechanische Einwirkungen.

An dem freien Ende des Schaftes ist ein Kopfstück angeordnet. Dieses umgibt das freie Ende des Schaftes wie ein Kragenflansch.

Sockel, Konus und Schaft sind mit besonderem Vorteil Hohlkörper, die gemeinsam eine Zusammensetzung bilden, die den Fundamentkörper ausmacht. Die Zusammensetzung ist vorzugsweise einteilig ausgebildet. Es ist jedoch auch möglich, die Einzelteile des Fundamentkörpers mit geeigneten Verbindungsmitteln zusammenzufügen.

Der Werkstoff für die den erfindungsgemäßen Fundamentkörper bildende Zusammensetzung aus Sockel, Konus und Schaft ist mit besonderem Vorteil Beton.

Beton weist das für einen Fundamentkörper für eine Windenergieanlage ausreichende Gewicht auf, ist relativ einfach zu verarbeiten und kann auf wirtschaftliche Art und Weise eine dauerhafte Konstruktion für den Fundamentkörper bilden.

Beton hat gegenüber anderen Werkstoffen, wie beispielsweise Stahl, den Vorteil einer höheren Seewasserbeständigkeit.

Die hohle Zusammensetzung kann, nachdem der Fundamentkörper am Aufstellungsort der Windenergieanlage durch Ballastwasser abgesenkt ist, mittels einer vom Kopfstück aus durch den Schaft einbringbaren Verfüllung aus rieselfähigem Ballastmaterial weiter beschwert werden. Als Ballastmaterial ist beispielsweise Sand geeignet, der sich mit Pumpen in den Fundamentkörper einbringen lässt.

Der erfindungsgemäße Fundamentkörper hat auch den wesentlichen Vorteil, dass er rückbaufähig ist. Die gesamte Windenergieanlage mit ihrem Fundamentkörper kann nach einer bestimmten Nutzungsdauer von z.B. 20 Jahren, rückstandsfrei zurückgebaut werden, womit der Meeresgrund wieder in den ursprünglichen Zustand versetzt ist. Der Rückbau erfolgt in umgekehrter Reihenfolge wie der vorbeschriebene Aufbau.

Ein Ausführungsbeispiel der Erfindung, aus dem sich weitere erfinderische Merkmale ergeben, ist in der Zeichnung dargestellt. Es zeigen:
- Fig. 1:: eine schematische Ansicht einer Ausführung des als Schwimmwanne ausgebildeten Sockels des Fundamentkörpers;
- Fig. 2:: eine Ansicht einer Aufnahme des Fundamentkörpers für einen Turm einer Windenergieanlage;
- Fig. 3:: eine Ansicht des Fundamentkörpers für eine Offshore-Windenergieanlage mit Sockel gemäß Fig. 1 und Aufnahme gemäß Fig. 2;
- Fig. 4:: eine Schnitt-Ansicht des Fundamentkörpers gemäß Fig. 3, und
- Fig. 5:: eine Ansicht einer Windenergieanlage deren Turm in der Aufnahme des auf dem Meeresgrund stehenden Fundamentkörpers gemäß Fig. 3 gehalten ist.

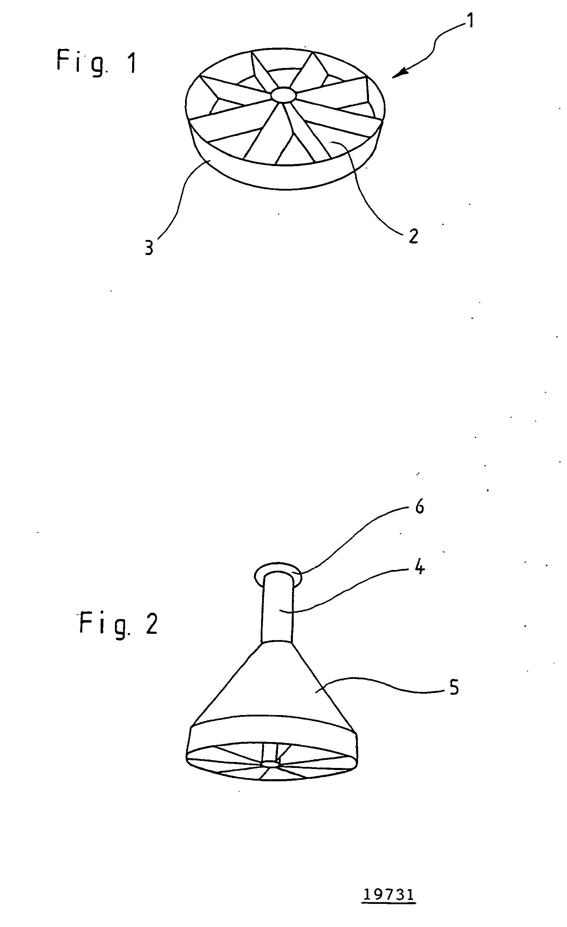

In Fig. 1 ist eine Ansicht eines Sockels 1 gezeigt. Der Sockel ist ein Bauteil aus Beton und ist als Schwimmwanne 2 ausgebildet, die Zylinderform aufweist.

Mit 3 ist eine Außenwand bezeichnet, die den für die Schwimmfähigkeit der Schwimmwanne 2 des Sockels 1 wesentlichen Freibord bildet.

Fig. 2 zeigt eine Ansicht eines Fundamentbauteils, welches den Sockel 1 gemäß Fig. 1 als aufgehendes Fundamentbauteil zugeordnet ist. Dieses Fundamentbauteil gemäß Fig. 2 weist ebenfalls, als Verlängerung des Sockels 1, Zylinderform auf, und läuft in einem Schaft 4 aus. Dieser Schaft 4 bildet die Aufnahme für einen Turm einer Windenergieanlage. Der Übergang vom Schaft 4 in den darunter befindlichen Sockel 1 ist als ein Konus 5 ausgeformt.

An dem freien Ende des Schaftes 4 ist ein Kopfstück 6 angeordnet, welches das freie Ende des Schaftes 4 wie ein Kragenflansch umgibt.

Fig. 1 und Fig. 2 verdeutlichen, dass Sockel 2, Konus 5 und Schaft 4 Hohlkörper sind. Die Hohlkörper bilden eine Zusammensetzung, die bei einer Ausführung der Fundamentteile, Sockel 1 gemäß Fig. 1 und Konus 5 mit Schaft 4 gemäß Fig. 2, einteilig ausgebildet ist. Der Werkstoff für die Zusammensetzung ist bei diesem Ausführungsbeispiel Beton.

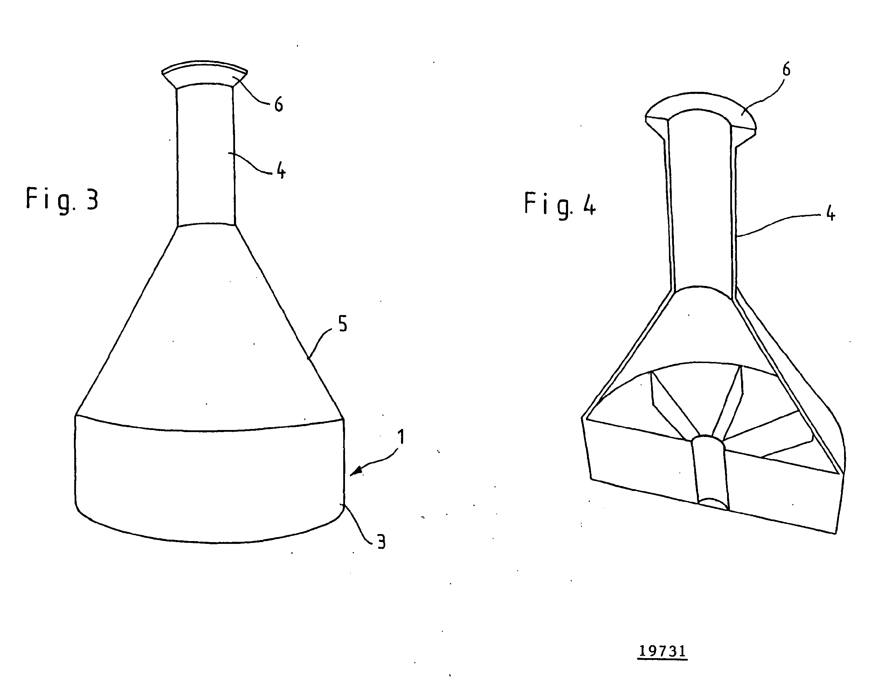

Fig. 4 ist eine schematische Ansicht zur Verdeutlichung des einteilig gefertigten hohlen Fundamentkörpers aus Beton. Der in Fig. 4 in einer Schnitt-ansicht gezeigte Fundamentkörper verdeutlicht, dass vom Kopfstück 6 aus durch den Schaft 4 Sand als Ballastmaterial einfüllbar ist, womit eine ausreichende Standfestigkeit für die Windenergieanlage erreicht wird.

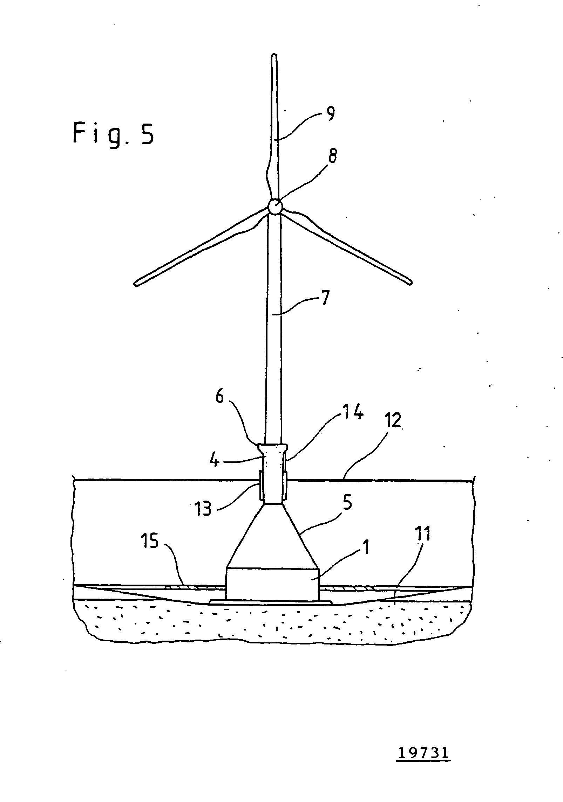

Fig. 5 zeigt eine Windenergieanlage mit Turm 7 und an dessen freiem Ende befindlicher Gondel 8 mit Rotorblättern 9. Der Turm 7 ist in dem Schaft 4 des Fundamentkörpers aufgenommen, der mit seinem Sockel 1 auf dem Meeresgrund 11 steht.

Es ist erkennbar, dass der Schaft 4 des Fundamentkörpers erst deutlich unterhalb der Wasserlinie 12 zum Konus 5 aufgeweitet ist, wodurch der Wellenangriff weitgehend reduziert wird.

Fig. 5 lässt andeutungsweise erkennen, dass außen an dem Schaft 4 unterhalb seines Kopfstücks 6 Ausrüstungsteile in Form von Schiffsabweisern 13 und auch Steigleitern 14 angeordnet sind.

Fig. 5 verdeutlich des Weiteren, dass der Meeresgrund 11 im Bereich der Aufstellung der Windenergieanlage mit einer Vertiefung versehen ist, die nach Absenken des aufgestellten Fundamentkörpers mit geeignetem Schüttmaterial aufgefüllt und darüber ein Kolkschutz 15 gelegt wird.

## Patentansprüche

1. Fundamentkörper für eine Offshore-Windenergieanlage, mit einem zum Standort der Windenergieanlage verbringbaren und dort versenkbaren Sockel, der die Basis einer Aufnahme für einen Turm der Windenergieanlage ist, und der
als eine Schwimmwanne ausgebildet ist, die Zylinderform aufweist, bei welcher das Verhältnis Zylinderhöhe zu Zylinderdurchmesser gleich 1:3 bis 1:4 ist, wobei die Aufnahme ein Schaft ist, bei dem das Verhältnis von Schaftdurchmesser zum Sockeldurchmesser ungefähr 1:6 bis 1:3 ist und ein Übergang vom Schaft in den Sockel als ein Konus ausgebildet ist, dessen Höhe etwa gleich der doppelten Höhe des Sockels ist, sowie an dem freien Ende des Schaftes ein Kopfstück angeordnet ist,
**dadurch gekennzeichnet,**
**dass** das Kopfstück (6) das freie Ende des Schaftes (4) wie ein Kragenflansch umgibt.

2. Fundamentkörper nach Anspruch 1, **dadurch gekennzeichnet, dass** Sockel (1), Konus (5) und Schaft (4) Hohlkörper sind.

3. Fundamentkörper nach Anspruch 2, **dadurch gekennzeichnet, dass** der Werkstoff für Sockel (1), Konus (5) und Schaft (4) Beton ist.

## Claims

1. A foundation body for an offshore wind energy plant, having a pedestal which can be brought to the site of the wind energy plant and sunk there, and which forms the base of a receptacle for a tower of the wind energy plant, and which is formed as a floating well with a cylindrical shape, in which the ratio of cylinder height to cylinder diameter is 1:3 to 1:4, wherein the receptacle is a shaft in which the ratio of shaft diameter to pedestal diameter is approximately 1:6 to 1:3, and a transition from the shaft to the pedestal is formed as a cone, the height of which is approximately equal to twice the height of the pedestal, and a head piece is arranged at the free end of the shaft,
**characterised in that**
the head piece (6) surrounds the free end of the shaft (4) in the manner of a flanged collar.

2. The foundation body according to Claim 1, **characterised in that** the pedestal (1), cone (5) and shaft (4) are hollow bodies.

3. The foundation body according to Claim 2, **characterised in that** the material for the pedestal (1), cone (5) and shaft (4) is concrete.

## Revendications

1. Corps de fondation pour installation éolienne offshore, comportant un socle pouvant être amené au site de l'installation éolienne et y être noyé, qui sert de base destinée à recevoir une tour de l'installation éolienne et qui est réalisé sous forme d'un bac flottant ayant une forme cylindrique, dans lequel le rapport entre la hauteur du cylindre et le diamètre du cylindre va de 1 à 3 jusqu'à 1 à 4, le support étant un arbre, dans lequel le rapport entre le diamètre de l'arbre et le diamètre du socle va approximativement de 1 à 6 jusqu'à 1 à 3 et une transition est réalisée de l'arbre vers le socle sous forme d'un cône dont la hauteur est approximativement égale au double de la hauteur du socle et un élément sommital est disposé à l'extrémité libre de l'arbre,
**caractérisé en ce que**
l'élément sommital (6) entoure l'extrémité libre de l'arbre (4) à la manière d'une bride à collerette.

2. Corps de fondation selon la revendication 1, **caractérisé en ce que** le socle (1), le cône (5) et l'arbre (4) sont des corps creux.

3. Corps de fondation selon la revendication 2, **caractérisé en ce que** le matériau utilisé pour le socle (1), le cône (5) et l'arbre (4) est du béton.
